# EUROPEAN PATENT SPECIFICATION

(11) **EP 3 572 936 B1**
(45) Date of publication and mention of the grant of the patent: **16.11.2022**
(21) Application number: 19174984.5
(22) Date of filing: 16.05.2019
(51) Int. Cl.: G06F 9/451

(54) **METHOD, TERMINAL AND COMPUTER-READABLE STORAGE MEDIUM FOR DISPLAYING INTERFACE OF APPLICATION PROGRAM**
VERFAHREN, ENDGERÄT UND COMPUTERLESBARES SPEICHERMEDIUM ZUR ANZEIGE EINER SCHNITTSTELLE EINES ANWENDUNGSPROGRAMMS
PROCÉDÉ, TERMINAL ET SUPPORT D'ENREGISTREMENT LISIBLE PAR ORDINATEUR POUR AFFICHER UNE INTERFACE DE PROGRAMME D'APPLICATION

(30) Priority: 22.05.2018 CN 201810496981
(43) Date of publication of application: 27.11.2019
(73) Proprietor: Beijing Xiaomi Mobile Software Co., Ltd., Beijing 100085 (CN)
(72) Inventor: WANG, Ju, Beijing, 100085 (CN); WANG, Shujie, Beijing, 100085 (CN)
(74) Representative: Hughes, Andrea Michelle

(56) References cited:
- US-A1- 2014 372 356
- US-A1- 2015 026 415
- US-A1- 2017 046 171

## Description

### TECHNICAL FIELD

The present disclosure relates to the field of electronics, and more particularly to a method, a terminal and a computer-readable storage medium for displaying an interface of an application program.

### BACKGROUND

With the development of electronic technology, the users increasingly hope that when the application program installed on a terminal is started, the terminal can quickly display a main operation interface of the application program.

In the related art, the user can trigger the start of the application program by clicking an icon of the application program displayed on the terminal. When the terminal starts the application program, it generally displays a startup animation for a few seconds, and then displays the main operation interface of the application program.

Since the time for displaying the startup animation is long in the related art, the display of the main operation interface of the application program is delayed and consequently displayed at a relatively slow speed.
In-Hyung JUNG (US 2017/0046171 A1) discloses an electronic device includes a housing, a display, an input unit, a processor, a non-volatile memory to store an application program, and a volatile memory to store instructions that allow the processor to load a first part of the application program in the volatile memory based on a second change of state of the electronic device and to display an image or text generated by the loaded first or second part. Since at least part of the application is preloaded before the second input is generated, only the remainder of the application has to be loaded in order to execute the application after the second input is generated. William Stryker (US 2015/0026415 A1) discloses a method for pre-loading contents in a cache of a mobile terminal, and a mobile terminal using the method. The method includes determining specific contents for pre-loading, determining circumstances for pre-loading the specific contents, and monitoring circumstances of the mobile terminal. If the circumstances for pre-loading are detected, the method determines whether the specific contents are already present in cache, and if the specific contents are not present in cache, loads the specific contents into the cache when the circumstances for pre-loading are detected.

### SUMMARY

This Summary is provided to introduce a selection of aspects of the present disclosure in a simplified form that are further described below in the Detailed Description. This Summary is not intended to identify key features or essential features of the claimed subject matter, nor is it intended to be used to limit the scope of the claimed subject matter. The invention is defined by the independent claims. Dependent claims disclose preferred embodiments of the invention.

Aspects of the disclosure provide a method for displaying an interface of an application program. The method includes displaying a first interface; preloading a second interface of a target application program when the first interface is displayed, the first interface being different from the second interface of the target application program; detecting a starting operation for the target application program; and displaying the second interface in response to detecting the starting operation for the target application program.

In an example, the first interface is an interface of a first application program, and the second interface is an operation interface of the target application program.

According to an aspect, when preloading the second interface of the target application program, the method further includes adding a target activity of the target application program to a designated location in a task stack, wherein the second interface is an interface of the target activity, wherein the task stack includes a plurality of activities, and wherein the first interface is an interface of an activity located at a top of the task stack; and running the target activity at the designated location in the task stack to preload the second interface.

In an example, the designated location in the task stack is at a bottom of the task stack.

According to an aspect, the method further includes prohibiting an audio from playing when the target activity includes the audio in a process of running the target activity.

According to another aspect, when displaying the second interface, the method further includes moving the target activity to the top of the task stack; and running the target activity at the top of the task stack to display the second interface.

According to yet another aspect, the method further includes determining the target application program based on a historic starting record of the application program.

According to yet another aspect, when preloading the second interface of the target application program, the method further includes preloading the second interface after detecting a preloading operation.

Aspects of the disclosure also provide a terminal for displaying an interface of an application program. The terminal includes a processor and a memory for storing instructions executable by the processor. The processor is configured to display a first interface; preload a second interface of a target application program when the first interface is displayed, the first interface being different from the second interface of the target application program; detect a starting operation for the target application program; and display the second interface in response to detecting the starting operation for the target application program.

Aspects of the disclosure also provide a non-transitory computer-readable storage medium having stored therein instructions that, when executed by a processor of a terminal, cause the terminal to display a first interface; preload a second interface of a target application program when the first interface is displayed, the first interface being different from the second interface of the target application program; detect a starting operation for the target application program; and display the second interface in response to detecting the starting operation for the target application program.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate aspects consistent with the disclosure and, together with the description, serve to explain the principles of the disclosure.
FIG. 1 is a flow chart showing a method for displaying an interface of an application program according to an exemplary aspect of the present disclosure;
FIG. 2 is a flow chart showing another method for displaying an interface of an application program according to an exemplary aspect of the present disclosure;
FIG. 3 is a schematic diagram of a structure of a task stack according to an exemplary aspect of the present disclosure;
FIG. 4 is a schematic diagram of a structure of a device for displaying an interface of an application program according to an exemplary aspect of the present disclosure;
FIG. 5 is a schematic diagram of a structure of another device for displaying an interface of an application program according to an exemplary aspect of the present disclosure;
FIG. 6 is a schematic diagram of a structure of yet another device for displaying an interface of an application program according to an exemplary aspect of the present disclosure; and
FIG. 7 is a block diagram of a terminal according to an exemplary aspect of the present disclosure.

The specific aspects of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

### DETAILED DESCRIPTION

Reference will now be made in detail to exemplary aspects, examples of which are illustrated in the accompanying drawings. The following description refers to the accompanying drawings in which the same numbers in different drawings represent the same or similar elements unless otherwise represented. The implementations set forth in the following description of illustrative aspects do not represent all implementations consistent with the disclosure. Instead, they are merely examples of apparatuses and methods consistent with aspects related to the disclosure as recited in the appended claims.

With the development of electronic technology, the users have an increasing requirement on the running speed of an application program. After clicking an icon of the application program displayed on a terminal (e.g., a mobile phone, a tablet computer, etc.), the user expects that the terminal can quickly display a main operation interface of the application program. However, the terminal needs to load the main operation interface before displaying the main operation interface, and the loading time is usually long (e.g., 5 seconds). In the process of loading the main operation interface, in order to improve the user experience, the terminal may display a startup interface, which may be a white interface or a startup animation, and after that, the terminal displays the operation interface of the application program. That is, after clicking the icon of the application program, the user cannot view the main operation interface until the startup interface is completely displayed. Therefore, the speed that the terminal displays the main operation interface of the application program is relatively slow.

In addition, if the main operation interface of a certain application program has been loaded on the terminal, but the application program is closed (that is, the process of such an application program is cleaned up), and then the main operation interface of the application program needs to be loaded again when the application program is started again, thus the user needs to view the startup interface of the application program again. Therefore, the steps for the terminal to display the main operation interface of the application program are complex.

In the method for displaying the interface of the application program provided by the aspect of the present disclosure, after the user clicks the icon of the application program, the terminal may directly open the main operation interface of the application program without a need to display the startup interface. That is, the speed that the terminal displays the main operation interface of the application program is increased, and the steps for the terminal to display the main operation interface are simplified.

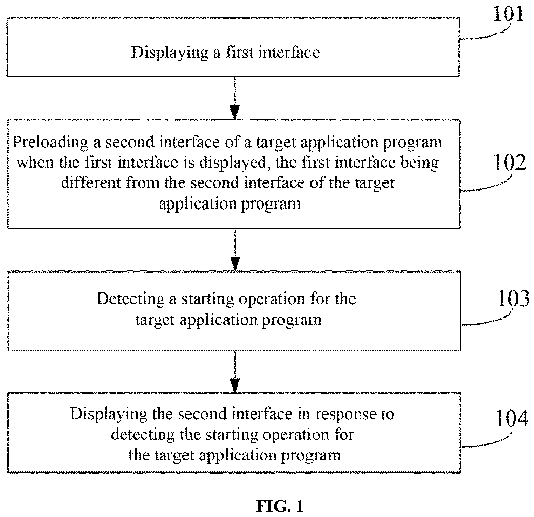

FIG. 1 is a flow chart showing a method for displaying an interface of an application program according to an exemplary aspect. The method may be applied to a device for displaying an interface of an application program. As shown in FIG. 1, the method may include following steps.

In step 101, a first interface is displayed.

In step 102, the second interface of a target application program is preloaded when a first interface is displayed, the first interface being different from the second interface of the target application program.

In step 103, a starting operation for the target application program is detected.

In step 104, the second interface is displayed upon detecting a starting operation for the target application program.

In summary, in the method for displaying the interface of an application program provided by the aspect of the present disclosure, the second interface of the target application program can be preloaded when the first interface is displayed. Then, as long as the starting operation for the target application program is detected, the preloaded second interface can be directly displayed. Thus, when the target application program is started, the terminal may directly display the second interface, without a need to load a second interface and to display the startup interface in the process of loading the second interface. Therefore, the speed of displaying the second interface of the target application program is relatively faster

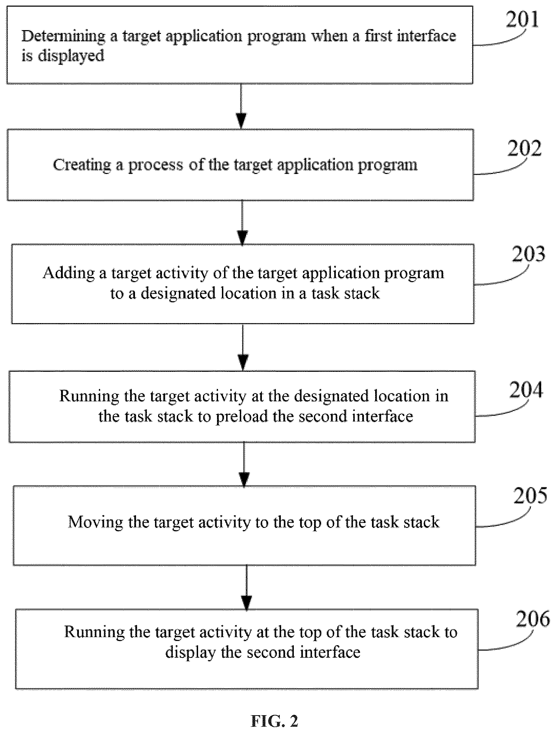

FIG. 2 is a flow chart of another method for displaying the interface of an application program according to an exemplary aspect. The method may be applied to a device for displaying an interface of the application program. As shown in FIG. 2, the method may comprise following steps.

In step 201, when a first interface is displayed, a target application program is determined.

The first interface may be an interface of a first application program. The first interface is different from an interface of the target application program, that is, the first application program is different from the target application program. The target application program may be an application program which is about to be started by the user and is predicted by the device for displaying an interface of the application program in advance, when the terminal displays the interface of the first application program. For example, the device for displaying an interface may determine the target application program according to a historical starting record of the application program.

Exemplarily, the device for displaying an interface may acquire user behavior data for starting the application program in the operation process of the terminal by the user, determine the next application program that is mostly likely to be started by the user according to the user behavior data when the terminal displays the interface of the first application program, and determine such an application program as the target application program. It is assumed that after the user controls the terminal to display the interface of an application program A, the next application program to be started is generally the application program B. Then when the first interface is the interface of the application program A, the device for displaying an interface may determine that the target application program is the application program B.

In step 202, a process of the target application program is created.

After the device for displaying an interface determines the target application program, the process of the target application program may be created, that is, the target application program is started.

In step 203, a target activity of the target application program is added to the designated location in a task stack.

It should be noted that each application program in an operating system (e.g., an Android operating system) may be formed by a plurality of activities. When running a certain activity of the application program, the terminal displays a user interface (UI) and responds to an operation of the user. The user interface is called as an interface of the activity. The task stack (Task) is a stack structure for storing the activities, that is, the task stack may comprise a plurality of activities (e.g., activities of several application programs).

The operating system can manage each activity orderly through the task stack and determine the activity that interacts with the user, such as the activity located at the stack top of the task stack (i.e., first or at a top of the task stack). It should be noted that the activities in the task stack may have corresponding levels in a window management service (WMS) system of the terminal. The terminal may determine the displayed interface according to the level corresponding to the activity. Herein, the closer the activity to the stack top in the task stack is, the higher the corresponding level is. The terminal only displays the interface of the activity with the highest level. Exemplarily, it is assumed that the interface of a first activity is the first interface, and then when the first activity is located at the stack top of the task stack, the level corresponding to the first activity in the WMS system is the highest. At this time, the terminal can display the first interface.

The target activity may be any activity of the target application program. The interface of the target activity may be an operation interface of the target application program (e.g., the main operation interface). The interface of the target activity may be called as a second interface. In the step 203, the target activity may be added to a designated location in the task stack. Exemplarily, the designated location in the task stack may be the stack bottom of the task stack (i.e., last or at a bottom of the task stack). That is, the target activity may be added to the stack bottom of the task stack, so as to facilitate the preloading of the operation interface without affecting other activities in the task stack.

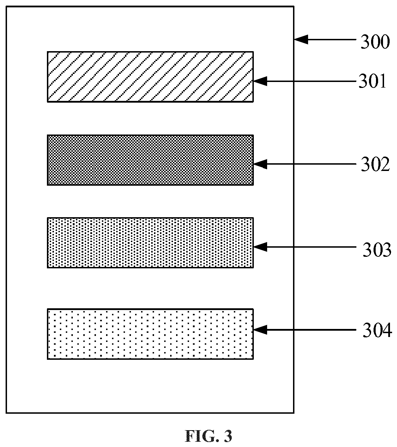

Optionally, referring to FIG. 3, the task stack 300 may comprise a plurality of subtask stacks. Generally, the task stack of the terminal comprises: a full-screen subtask stack 301, and a main page subtask stack 302 and a recent subtask stack 303. The full-screen subtask stack 301 is configured to store the activities of the application program. The main page subtask stack 302 is configured to store the activities of a terminal main page (also referred to as a home interface). The recent subtask stack 303 is configured to store recently running activities. In the step 203, the device for displaying an interface may store the target activity of the target application program in a newly-added subtask stack 304, and add the newly-added subtask stack 304 to the task stack 300. The newly-added subtask stack 304 is caused to be located at the stack bottom of the task stack 300, thereby further obtaining a task stack as shown in FIG. 3.

In step 204, the activity at the designated location in the task stack is ran to preload the second interface.

The process of running the activity of the application program comprises: a process of loading the interface of the application program. Exemplarily, the device for displaying an interface may control the activity located at the designated location in the task stack to run, that is, may control the target activity of the target application program to run, so as to preload the second interface of the target activity. The running process of the target activity may comprise the processes of activity startup (also referred to as activity Start), interface drawing, starting window (also referred to as starting Window) and the like.

Optionally, in an operation process of the target activity, when the target activity carries an audio, the device for displaying an interface may prohibit the audio from playing. Exemplarily, if the target application program is a game application program, since the activity of the game application program usually carries the audio, and the audio will affect the use of the first application program when the activity runs. When running the target activity, the device for displaying an interface can control an audio manager (Audio Flinger) for managing the terminal to play the audio to prohibit the audio from playing.

It should be noted that as long as the activity is in a running (also referred to as resumed) state, the interface manager (Surface Flinger) in the WMS system will synthesize the interface of the activity. When the terminal displays the first interface, the target activity is also in the running state, so that the interface manager also synthesizes the interface of the target activity (i.e., the second interface). However, since the target activity is located at the stack bottom of the task stack, if the first interface is the interface of the first activity, then the first activity is located at the stack top of the task stack, and the level of the target activity is lower than the level of the first activity. Therefore, the second interface is covered by the first interface, thereby ensuring that the second interface is invisible to the user. The terminal only displays the first interface, that is, it is guaranteed that the process of preloading the second interface will not affect the interaction between the user and the first interface of the first application program.

It should also be noted that when the target activity runs, the interface displayed by the terminal (i.e., the first interface) may be any interface other than the interface of the target application program. For example, the first interface may be the interface of the first application program and may also be the main page of the terminal. Exemplarily, if the first interface is the interface of the application program A and the second interface is the operation interface of the application program B, when the interface displayed by the terminal is switched from the interface of the application program A to the main page of the terminal, the first interface becomes the main page of the terminal. At this time, if the operation interface of the application program B has not been loaded yet, the device for displaying an interface can control the target activity to continue running.

In step 205, when a starting operation for the target application program is detected, the target activity is moved to the stack top of the task stack.

If the user wants to start a target application program, a starting operation for the target application program can be performed. For example, the starting operation may be a click operation for the icon of the target application program on the terminal. It should be noted that when the device for displaying an interface detects the starting operation for the target application program, the interface of the target activity (that is, the second interface) may be preloaded or may not be preloaded.

If the second interface is not preloaded when the device for displaying an interface detects the starting operation, the device for displaying an interface may directly control the target activity to be in a suspended state. Then the target activity is moved to the stack top of the task stack, to facilitate displaying the interface of the target activity.

If the second interface has been preloaded before the device for displaying an interface detects the starting operation, the device for displaying an interface may control the target activity to be in the suspended state when the preloading of the second interface is completed. After detecting the starting operation, the device for displaying an interface moves the target activity to the stack top of the task stack.

It should be noted that in the aspects of the present disclosure, the moving of the target activity to the stack top of the task stack by the device for displaying an interface may comprise: the target activity is controlled to be in the suspended state firstly. It should be noted that if the target activity has been already in the suspended state before the target activity is moved to the stack top of the task stack, then there is no need to perform the step of controlling the target activity to be in the suspended state. Then, the suspended target activity is migrated to the stack top of the full-screen subtask stack, and the newly-added subtask stack where the target activity was originally located is deleted. Finally, the full-screen subtask stack can be placed at the stack top of the task stack, so as to move the target activity to the stack top of the task stack.

Optionally, when completing the preloading process of the second interface but not detecting the starting operation for the target application program within a preset time period, the device for displaying an interface may delete the target activity, to prevent the waste of terminal resources.

In step 206, the activity at the stack top of the task stack is ran to display the second interface.

After the device for displaying an interface moves the target activity to the stack top of the task stack, the target activity can be ran, so that the terminal displays the interface of the target activity, i.e., the second interface.

Optionally, in the aspects of the present disclosure, whether the device for displaying an interface performs the preloading of the interface may be set by the user. Exemplarily, the user can set the terminal to determine whether the device for displaying an interface performs the preloading of the interface when the terminal displays the first interface. Exemplarily, the user can operate on the terminal to trigger the terminal to display a preloading option. When the device for displaying an interface detects a selection operation of the user on the preloading option, it can be determined that the preloading operation is detected. Then, when the terminal displays the first interface, the device for displaying an interface may perform the preloading of the interface according to the preloading operation. That is, when the terminal displays the first interface, the step 201, the step 202, the step 203, and the step 204 are sequentially performed.

It should be noted that the aspects of the present disclosure take the device for displaying an interface in the step 201, which determines the target application program according to the historical starting record of the application program, as an example. Optionally, the device for displaying an interface may also determine the target application program through the selection operation of the user for the target application program. For example, the selection operation may be a click operation for the icon of the target application program on the terminal.

Exemplarily, when the user clicks the icon of the application program A displayed on the terminal, the application program A is immediately exited, so that the terminal displays the main page of the terminal or the interfaces of other application programs (e.g., the application program B). At this time, if the loading of the operation interface of the application program A is not completed, the device for displaying an interface can determine the application program A as the target application program. At this time, the device for displaying an interface will perform the step of creating a process of the application program A when the user clicks the icon of the application program A displayed on the terminal. Therefore, after the step 201, the device for displaying an interface may not perform the step 202 and directly perform the step 203. If the step of creating the process of the application program A is not completed, the device for displaying an interface may continue to perform the step 202.

In the related art, when the device for displaying an interface determines the application program about to be started, the creation of the process can be performed in advance, thereby reducing the starting time of the application program. However, such a solution only preloads the process of the application program without preloading the operation interface of the application program. The time required to create the process is minimal for the time required to load the operation interface, so that the speed at which the terminal displays the operation interface of the application program is still slower. In the aspects of the present disclosure, the device for displaying an interface can not only create the process in advance, but also preload the second interface (e.g., the operation interface) of the application program. After the preloading of the operation interface is completed, as long as the starting operation for the target application program is detected, the operation interface of the target application program can be directly displayed by the terminal, thereby greatly improving the speed of displaying the operation interface of the application program. Even if the starting operation for the target application program is detected before the preloading of the operation interface is completed, the device for displaying an interface can continue loading the second interface through the terminal. Before the loading is completed, in order to improve the user experience, the terminal can be controlled to display the startup interface. In this way, parts of the operation of loading the second interface have been performed before the target application program is started. Therefore, after the target application program is started, the remaining loading time of the second interface is greatly reduced, and the time for displaying the startup interface is greatly reduced.

In the aspects of the present disclosure, when the first interface is displayed by the device for displaying an interface of the application program, the target application program about to be started may be determined according to the historical starting record of the application program. Then, the device for displaying an interface can create the process of the target application program, and add the target activity of the target application program to the designated location in the task stack (e.g., the stack bottom). The second interface may be preloaded by running the target activity of the target application program. When detecting the starting operation for the target application program, the device for displaying an interface can move the target activity to the stack top of the task stack, and run the target activity again to skip the process of loading the second interface, so that the terminal directly displays the second interface.

In summary, in the method for displaying the interface of the application program provided by the aspect of the present disclosure, the second interface of the target application program can be preloaded when the first interface is displayed. Then, as long as the starting operation for the target application program is detected, the preloaded second interface can be directly displayed. Thus, when the target application program is started, the terminal may directly display the second interface, without a need to load a second interface and to display the startup interface in the process of loading the second interface. Therefore, the speed of displaying the second interface of the target application program is relatively faster.

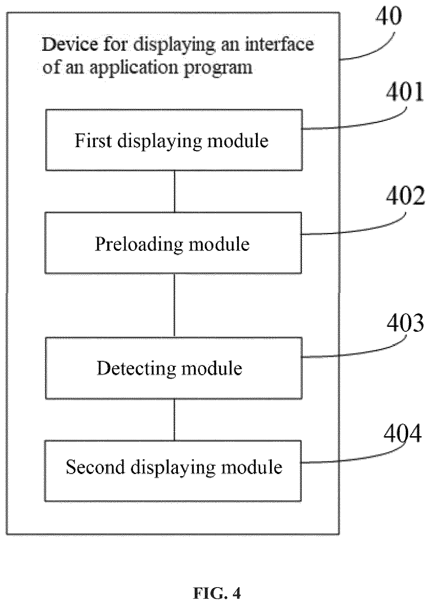

FIG. 4 is a schematic diagram of a structure of a device for displaying an interface of an application program according to an exemplary aspect. As shown in FIG. 4, the device 400 for displaying an interface of an application program may include: a first displaying module 401 configured to display a first interface, a preloading module 402 configured to preload a second interface of a target application program when a first interface is displayed, the first interface being different from the interface of the target application program; a detecting module 403 configured to detect a starting operation for the target application program; and a second displaying module 404 configured to display the second interface upon detecting a starting operation for the target application program.

In summary, in the device for displaying the interface of an application program provided by the aspect of the present disclosure, the second interface of the target application program can be preloaded when the first interface is displayed. Then, as long as the starting operation for the target application program is detected, the preloaded second interface can be directly displayed. Thus, when the target application program is started, the terminal may directly display the second interface, without a need to load a second interface and to display the startup interface in the process of loading the second interface. Therefore, the speed of displaying the second interface of the target application program is relatively faster.

Optionally, the first interface is an interface of a first application program, and the second interface is an operation interface of the target application program.

Optionally, the preloading module is further configured to: add a target activity of the target application program to a designated location in a task stack, wherein the second interface is an interface of the target activity, the task stack comprises a plurality of activities, and when the first interface is displayed, the first interface is an interface of the activity at the stack top of the task stack; and run the activity in the designated location in the task stack to preload the second interface.

Optionally, the designated location in the task stack may be the stack bottom of the task stack.

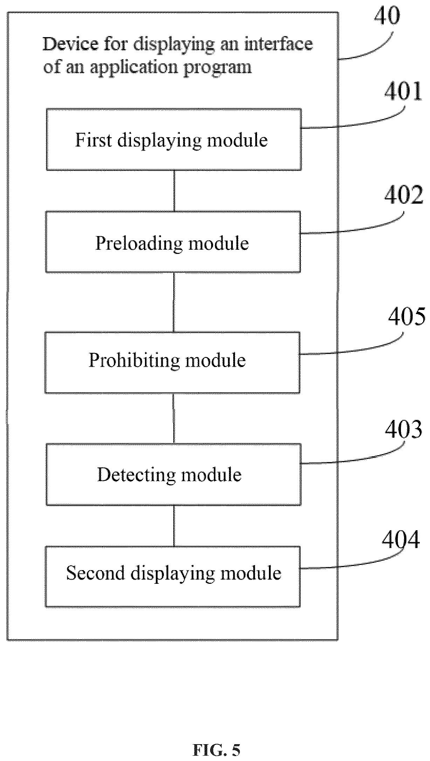

Optionally, FIG. 5 is a schematic diagram of a structure of another device for displaying an interface of an application program according to an exemplary aspect. Based on FIG. 4, as shown in FIG. 5, the device 400 for displaying an interface of an application program may further include: a prohibiting module 405 configured to prohibit an audio from playing when the target activity carries the audio in the process of running the target activity.

Optionally, the displaying module is further configured to: move the target activity to the stack top of the task stack; and run the activity at the stack top of the task stack to display the second interface.

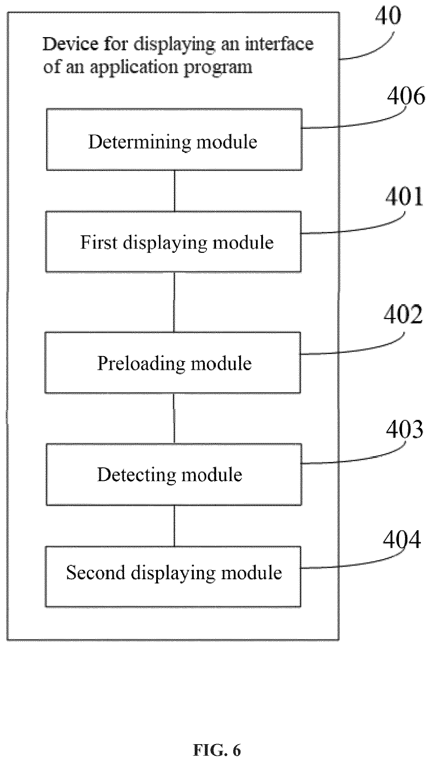

Optionally, FIG. 6 is a schematic diagram of a structure of still another device for displaying an interface of an application program according to an exemplary aspect. Based on FIG. 4, as shown in FIG. 6, the device for displaying an interface of an application program may further include: a determining module 406 configured to determine the target application program according to a historic starting record of the application program.

Optionally, the preloading module is further configured to: preload the second interface after detecting a preloading operation.

In summary, in the method for displaying the interface of the application program provided by the aspect of the present disclosure, the second interface of the target application program can be preloaded when the first interface is displayed. Then, as long as the starting operation for the target application program is detected, the preloaded second interface can be directly displayed. Thus, when the target application program is started, the terminal may directly display the second interface, without a need to load a second interface and to display the startup interface in the process of loading the second interface. Therefore, the speed of displaying the second interface of the target application program is relatively faster.

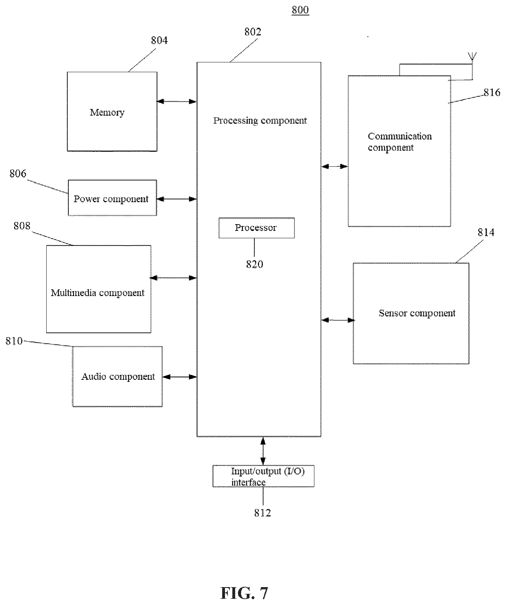

FIG. 7 is a block diagram of a terminal 800 according to an exemplary aspect. The terminal may be configured to display an interface of an application program. Exemplarily, the device 800 may be a mobile phone, a computer, a digital broadcast terminal, a messaging device, a gaming console, a tablet, a medical device, exercise equipment, a personal digital assistant, and the like.

Referring to FIG. 7, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operations of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some aspects,, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some aspects,, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or may have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some aspects,, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some aspects, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary aspect, the communication component 816 receives a broadcast signal or broadcast associated information from an external broadcast management system via a broadcast channel. In one exemplary aspect, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary aspects, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary aspects, there is also provided a non-transitory computer-readable storage medium including instructions, such as included in the memory 804, executed by the processor 820 in the device 800, for performing the above-described methods. For example, the non-transitory computer-readable storage medium may be a ROM, a RAM, a CD-ROM, a magnetic tape, a floppy disc, an optical data storage device, and the like.

The aspects shown in FIG. 1 and FIG. 2 may be partially or completely implemented by software, hardware, firmware or any combination thereof. When implemented by software, the aspects may be partially or completely implemented in a form of program products that include one or more instructions. The instructions, when loaded and executed by a processing component, all or part of the processes or functions described in the aspects of the present disclosure.

It should be noted that the method aspects and the device aspects of the present disclosure may be referred to each other, which is not limited by the aspects of the present disclosure. The order of steps in the method aspects of the present disclosure may be adjusted approriately, and may also be added or reduced accordingly. Any methods of varitaions that may be readliy derived a technical person in the art within the technical scope disclosed by the present disclosure shall fall within the protection scope of the present disclosure, which is not repeated herein.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

Other aspects of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for displaying an interface of an application program, comprising:
displaying (101) a first interface;
preloading (102) a second interface of a target application program when the first interface is displayed, the first interface being different from the second interface of the target application program;
detecting (103) a starting operation for the target application program; and
displaying (104) the second interface in response to detecting the starting operation for the target application program,
wherein preloading the second interface of the target application program is **characterized by**
adding (203) a target activity of the target application program to a designated location in a task stack, wherein the second interface is an interface of the target activity;
running (204) the target activity at the designated location in the task stack to preload the second interface by:
continuing, when the interface displayed by the terminal is switched from the first interface to a main page of the terminal, the running of the target activity if the second interface has not been loaded yet.

2. The method according to claim 1, wherein the first interface is an interface of a first application program, and the second interface is an operation interface of the target application program.

3. The method according to claim 1, wherein the designated location in the task stack is at a bottom of the task stack.

4. The method according to claim 3, further comprising:
prohibiting an audio from playing when the target activity includes the audio in a process of running the target activity.

5. The method according to claim 3 or 4, wherein displaying the second interface comprises:
moving (205) the target activity to the top of the task stack; and
running (206) the target activity at the top of the task stack to display the second interface.

6. The method according to any preceding claim, further comprising:
determining the target application program based on a historic starting record of the application program.

7. The method according to any preceding claim, wherein preloading the second interface of the target application program comprises:
preloading the second interface after detecting a preloading operation.

8. A device for displaying an interface of an application program, comprising: a first displaying module (401) configured to display a first interface;
a preloading module (402) configured to preload a second interface of a target application program when the first interface is displayed, the first interface being different from the second interface of the target application program;
a detecting module (403) configured to detect a starting operation for the target application program; and
a second displaying module (404) configured to display the second interface in response to detecting the starting operation for the target application program,
**characterized by** the preloading module (402) being further configured to:
add a target activity of the target application program to a designated location in a task stack, wherein the second interface is an interface of the target activity;
run the target activity at the designated location in the task stack to preload the second interface by:
continuing, when the interface displayed by the terminal is switched from the first interface to a main page of the terminal, the running of the target activity if the second interface has not been loaded yet.

9. The device according to claim 8, wherein the first interface is an interface of a first application program, and the second interface is an operation interface of the target application program.

10. The device according to claim 8, wherein the designated location in the task stack is a bottom of the task stack.

11. The device according to claim 8 or 10, further comprising:
a prohibiting module (405) configured to prohibit an audio from playing when the target activity includes the audio in a process of running the target activity.

12. A non-transitory computer-readable storage medium having stored therein instructions, **characterized in that**, when executed by a processor of a terminal, the instructions cause the terminal to perform the method for displaying the interface of the application program according to any one of claims 1-7.

## Patentansprüche

1. Verfahren zum Anzeigen einer Oberfläche eines Anwendungsprogramms, umfassend:
Anzeigen (101) einer ersten Oberfläche;
Vorladen (102) einer zweiten Oberfläche eines Zielanwendungsprogramms, wenn die erste Oberfläche angezeigt wird, wobei sich die erste Oberfläche von der zweiten Oberfläche des Zielanwendungsprogramms unterscheidet;
Detektieren (103) eines Startvorgangs für das Zielanwendungsprogramm; und
Anzeigen (104) der zweiten Oberfläche in Reaktion auf Detektieren des Startvorgangs für das Zielanwendungsprogramm,
wobei Vorladen der zweiten Oberfläche des Zielanwendungsprogramms **gekennzeichnet ist durch**:
Hinzufügen (203) einer Zielaktivität des Zielanwendungsprogramms zu einer designierten Stelle in einem Aufgabenstapel, wobei die zweite Oberfläche eine Oberfläche der Zielaktivität ist;
Laufenlassen (204) der Zielaktivität an der designierten Stelle in dem Aufgabenstapel, um die zweite Oberfläche vorzuladen **durch**:
Fortsetzen, wenn die **durch** das Endgerät angezeigte Oberfläche von der ersten Oberfläche zu einer Hauptseite des Endgeräts umgeschaltet wird, des Laufenlassens der Zielaktivität, wenn die zweite Oberfläche noch nicht geladen worden ist.

2. Verfahren nach Anspruch 1, wobei die erste Oberfläche eine Oberfläche eines ersten Anwendungsprogramms ist und die zweite Oberfläche eine Bedienungsoberfläche des Zielanwendungsprogramms ist.

3. Verfahren nach Anspruch 1, wobei die designierte Stelle in dem Aufgabenstapel an einer Unterseite des Aufgabenstapels ist.

4. Verfahren nach Anspruch 3, weiter umfassend:
Verhindern des Abspielens eines Tons, wenn die Zielaktivität den Ton in einem Prozess des Laufenlassens der Zielaktivität einschließt.

5. Verfahren nach Anspruch 3 oder 4, wobei Anzeigen der zweiten Oberfläche umfasst:
Bewegen (205) der Zielaktivität zu der Oberseite des Aufgabenstapels; und
Laufenlassen (206) der Zielaktivität an der Oberseite des Aufgabenstapels, um die zweite Oberfläche anzuzeigen.

6. Verfahren nach einem vorstehenden Anspruch, weiter umfassend:
Bestimmen des Zielanwendungsprogramms auf Grundlage einer historischen Startaufzeichnung des Anwendungsprogramms.

7. Verfahren nach einem vorstehenden Anspruch, wobei Vorladen der zweiten Oberfläche des Zielanwendungsprogramms umfasst:
Vorladen der zweiten Oberfläche nach Detektieren eines Vorladevorgangs.

8. Vorrichtung zum Anzeigen einer Oberfläche eines Anwendungsprogramms, umfassend: ein erstes Anzeigemodul (401), konfiguriert, um eine erste Oberfläche anzuzeigen;
ein Vorlademodul (402), konfiguriert, um eine zweite Oberfläche eines Zielanwendungsprogramms vorzuladen, wenn die erste Oberfläche angezeigt wird, wobei sich die erste Oberfläche von der zweiten Oberfläche des Zielanwendungsprogramms unterscheidet;
ein Detektionsmodul (403), konfiguriert, um einen Startvorgang für das Zielanwendungsprogramm zu detektieren; und
ein zweites Anzeigemodul (404), konfiguriert, um die zweite Oberfläche in Reaktion auf Detektieren des Startvorgangs für das Zielanwendungsprogramm anzuzeigen,
**dadurch gekennzeichnet, dass** das Vorlademodul (402) weiter konfiguriert ist, um:
eine Zielaktivität des Zielanwendungsprogramms an eine designierte Stelle in einem Aufgabenstapel hinzuzufügen, wobei die zweite Oberfläche eine Oberfläche der Zielaktivität ist;
die Zielaktivität an der designierten Stelle in dem Aufgabenstapel laufen zu lassen, um die zweite Oberfläche vorzuladen durch:
Fortsetzen, wenn die durch das Endgerät angezeigte Oberfläche von der ersten Oberfläche zu einer Hauptseite des Endgeräts umgeschaltet wird, des Laufenlassens der Zielaktivität, wenn die zweite Oberfläche noch nicht geladen worden ist.

9. Vorrichtung nach Anspruch 8, wobei die erste Oberfläche eine Oberfläche eines ersten Anwendungsprogramms ist und die zweite Oberfläche eine Bedienungsoberfläche des Zielanwendungsprogramms ist.

10. Vorrichtung nach Anspruch 8, wobei die designierte Stelle in dem Aufgabenstapel eine Unterseite des Aufgabenstapels ist.

11. Vorrichtung nach Anspruch 8 oder 10, weiter umfassend:
ein Verhinderungsmodul (405), konfiguriert, um Abspielen eines Tons zu verhindern, wenn die Zielaktivität den Ton in einem Prozess des Laufenlassens der Zielaktivität einschließt.

12. Nicht-transitorisches computerlesbares Speichermedium mit darin gespeicherten Anweisungen, **dadurch gekennzeichnet, dass**, wenn durch einen Prozessor eines Endgeräts ausgeführt, die Anweisungen das Endgerät veranlassen, das Verfahren zum Anzeigen der Oberfläche des Anwendungsprogramms nach einem der Ansprüche 1-7 durchzuführen.

## Revendications

1. Procédé pour afficher une interface d'un programme d'application, comprenant :
l'affichage (101) d'une première interface ;
le préchargement (102) d'une seconde interface d'un programme d'application cible lorsque la première interface est affichée, la première interface étant différente de la seconde interface du programme d'application cible ;
la détection (103) d'une opération de démarrage pour le programme d'application cible ; et
l'affichage (104) de la seconde interface en réponse à la détection de l'opération de démarrage pour le programme d'application cible,
dans lequel le préchargement de la seconde interface du programme d'application cible est **caractérisé par** :
l'ajout (203) d'une activité cible du programme d'application cible à un emplacement désigné dans une pile de tâches, dans lequel la seconde interface est une interface de l'activité cible ;
l'exécution (204) de l'activité cible au niveau de l'emplacement désigné dans la pile de tâches pour précharger la seconde interface en :
poursuivant, lorsque l'interface affichée par le terminal passe de la première interface à une page principale du terminal, l'exécution de l'activité cible si la seconde interface n'a pas encore été chargée.

2. Procédé selon la revendication 1, dans lequel la première interface est une interface d'un premier programme d'application, et la seconde interface est une interface d'opération du programme d'application cible.

3. Procédé selon la revendication 1, dans lequel l'emplacement désigné dans la pile de tâches est au niveau d'un fond de la pile de tâches.

4. Procédé selon la revendication 3, comprenant en outre :
l'interdiction de lire un audio lorsque l'activité cible inclut l'audio dans un processus d'exécution de l'activité cible.

5. Procédé selon la revendication 3 ou 4, dans lequel l'affichage de la seconde interface comprend :
le déplacement (205) de l'activité cible vers le haut de la pile de tâches ; et
l'exécution (206) de l'activité cible au niveau du haut de la pile de tâches pour afficher la seconde interface.

6. Procédé selon une quelconque revendication précédente, comprenant en outre :
la détermination du programme d'application cible sur la base d'un enregistrement de démarrage historique du programme d'application.

7. Procédé selon une quelconque revendication précédente, dans lequel le préchargement de la seconde interface du programme d'application cible comprend :
le préchargement de la seconde interface après la détection d'une opération de préchargement.

8. Dispositif pour afficher une interface d'un programme d'application, comprenant : un premier module d'affichage (401) configuré pour afficher une première interface ;
un module de préchargement (402) configuré pour précharger une seconde interface d'un programme d'application cible lorsque la première interface est affichée, la première interface étant différente de la seconde interface du programme d'application cible ;
un module de détection (403) configuré pour détecter une opération de démarrage pour le programme d'application cible ; et
un second module d'affichage (404) configuré pour afficher la seconde interface en réponse à la détection de l'opération de démarrage pour le programme d'application cible,
**caractérisé en ce que** le module de préchargement (402) est en outre configuré pour :
ajouter une activité cible du programme d'application cible à un emplacement désigné dans une pile de tâches, dans lequel la seconde interface est une interface de l'activité cible ;
exécuter l'activité cible au niveau de l'emplacement désigné dans la pile de tâches pour précharger la seconde interface en :
poursuivant, lorsque l'interface affichée par le terminal passe de la première interface à une page principale du terminal, l'exécution de l'activité cible si la seconde interface n'a pas encore été chargée.

9. Dispositif selon la revendication 8, dans lequel la première interface est une interface d'un premier programme d'application, et la seconde interface est une interface d'opération du programme d'application cible.

10. Dispositif selon la revendication 8, dans lequel l'emplacement désigné dans la pile de tâches est un fond de la pile de tâches.

11. Dispositif selon la revendication 8 ou 10, comprenant en outre :
un module d'interdiction (405) configuré pour interdire de lire un audio lorsque l'activité cible inclut l'audio dans un processus d'exécution de l'activité cible.

12. Support de stockage non transitoire lisible sur ordinateur sur lequel sont stockées des instructions, **caractérisé en ce que**, lorsqu'elles sont exécutées par un processeur d'un terminal, les instructions amènent le terminal à réaliser le procédé pour afficher l'interface du programme d'application selon l'une quelconque des revendications 1-7.
